# EUROPEAN PATENT APPLICATION

(11) **EP 2 130 860 A1**
(43) Date of publication of application: **09.12.2009**
(21) Application number: 08251975.2
(22) Date of filing: 06.06.2008
(51) Int. Cl.: C08L 23/00

(54) **Polymer**

(71) Applicant: Borealis Technology Oy, 06101 Porvoo (FI)
(72) Inventor: Krajete, Alexander, 4020 Linz (AT); Dreng, Tore, 3261 Larvik (NO); Kona, Balakantharao, 4020 Linz (AT)
(74) Representative: Campbell, Neil Boyd

(57) **Abstract**

A multimodal polymer comprising a higher molecular weight component and a lower molecular weight component,
said lower molecular weight component being an ethylene homopolymer or ethylene copolymer with at least one C₃₋₂₀ α-olefin; and
said higher molecular weight component being a copolymer of ethylene, at least one aliphatic diene and optionally at least one C₃₋₂₀ α-olefin;
wherein the density of the multimodal polymer is from 935 to 980 kg/m³.

## Description

This invention relates to a mulitmodal olefin polymer comprising ethylene and at least one aliphatic diene comonomer, in particular 1,3-butadiene, as well as ways to manufacture this polymer and uses thereof in the manufacture of articles such as caps and closures.

As raw materials become more expensive and consumers and manufacturers more demanding, polymer retailers are looking to provide lower cost, high performance articles to their customers. For moulded polymer items such as caps and closures for containers, the properties of the polymer of most importance are often the environmental stress cracking resistance (ESCR), impact strength and the stiffness of the article.

Higher stiffness allows articles such as caps to be manufactured with thinner walls and hence allows less raw material to be used per article than for less stiff articles. Thinner walls also means lighter articles and hence lower transport costs. Lighter articles also means a reduction in cycle time which is also of great importance. Lighter articles will cool more rapidly allowing the moulding process to be run more frequently. If therefore, a polymer can be made which allows cycle times to be reduced, even by a small amount, more articles can be produced in a given period of time.

Unfortunately, the person skilled in the art is also aware that article weight cannot simply be reduced. The article needs to be rigid enough that it does not deform in use. For example, a cap needs to have sufficient screw thread that a proper seal with the bottle is achieved and needs not to deform when being removed from the bottle. Most importantly, the cap must be able to withstand considerable internal pressure when in use, in particular when packaging carbonated drinks. When packaging carbonated drinks, the presence of carbon dioxide in the bottle exerts considerable pressure on the cap. Typically, caps must be able to withstand 3-4 bars of internal pressure or else they may fail.

In general, stiffness and ESCR can be improved by the skilled man in known ways, e.g. by increasing the molecular weight of the polymer or by using a metallocene catalyst to manufacture a polymer. Higher molecular weight polymers and those made using metallocene catalysts are known to possess improved mechanical properties over Ziegler Natta polymers or polymers of lower molecular weight. However, these techniques for improving mechanical properties are only valuable if processability and particularly flowability is maintained. Polymers with poor flow are not readily extruded or moulded and are therefore of limited value.

There is therefore a trade off between mechanical properties and processability. Those materials which exhibit the best mechanical properties tend to possess poor processability. Those materials which are readily processed have poor mechanical properties.

There is also a link between stiffness and impact strength. Stiffer materials tend to have poorer impact strength as they exhibit more brittle behaviour. High impact strength materials tend to be soft to absorb impacts as opposed to stiff and hence more brittle. For a moulded article however, the ability to withstand impact is also critical. The manufacture of articles with high stiffness and good impact properties is however a problem for the skilled man.

The present inventors have therefore sought new polymer materials with high stiffness and/or good ESCR without detrimentally affecting processability and/or impact strength. They have found that a solution to this problem is the polymers claimed herein employing an aliphatic diene comonomer in one component of a multimodal polymer.

The claimed polymers have remarkable stiffness and/or ESCR, better for example than comparable ethylene hexene or ethylene butene copolymers, and these values can be achieved without significant loss of processability and/or impact strength. Hence, an ideal balance of stiffness and impact strength can also be achieved using the claimed polymers.

Simple unimodal copolymers of ethylene and dienes are not new. US 5504171 describes polymers formed using non conjugated longer chain dienes which form gel free crystalline polymers.

JP11035744 describes a complex composition comprising as one component an α-olefin conjugated diene based copolymer, e.g. divinyl benzene.

WO01/62808 describes the introduction of small amounts of diene into a polymer to control melt index without affecting density.

WO97/19965 describes the introduction of long chain dienes of at least 7 carbon atoms into an interpolymer to give a polymer material high in melt tension, and having good processability.

JP2001261054 describes a cap liner formed from a complex composition including a ethylene propylene non conjugated diene rubber.

EP667359 describes graft polymers where a conventional olefin polymer is grafted onto a ethylene diene copolymer. These polymers allegedly have excellent processability.

The present inventors have realised that a multimodal polymer in which an aliphatic diene is present in the higher molecular weight component of the polymer can provide a high stiffness, high ESCR polymer which is still readily processable and can possess excellent impact strength.

Whilst polymers of dienes are therefore known in the art, nowhere before has anyone manufactured a multimodal polymer in which one of the components comprises a diene comonomer or realised the benefits such a structure can provide.

Thus, viewed from one aspect, the invention provides a multimodal polymer comprising a higher molecular weight component and a lower molecular weight component,
said lower molecular weight component being an ethylene homopolymer or ethylene copolymer with at least one C₃₋₂₀ α-olefin; and
said higher molecular weight component being a copolymer of ethylene, at least one aliphatic diene and optionally at least one C₃₋₂₀ α-olefin;
wherein the density of the multimodal polymer is from 935 to 980 kg/m³.

Viewed from another aspect the invention provides an article comprising a polymer as hereinbefore described, especially a moulded article.

Viewed from another aspect the invention provides the use of a polymer as hereinbefore defined in the manufacture of a moulded article, e.g. a cap or closure.

Viewed from another aspect the invention provides a process for the manufacture of a polymer as hereinbefore defined comprising, in a first stage polymerising ethylene and optionally at least one C₃₋₂₀ α-olefin in the presence of a catalyst, e.g. a single site catalyst, to form a lower molecular weight component;
recovering the LMW component;
feeding the LMW component to a second stage;
feeding ethylene, at least one aliphatic diene and optionally at least one C₃₋₂₀ α-olefin into said second stage;
subjecting the additional ethylene at least one aliphatic diene and optionally at least one C₃₋₂₀ α-olefin to a second polymerisation reaction in the presence of the catalyst from the first stage and the LMW component; and
recovering the combined polymerisation product from the second reaction zone.

### Properties of the Multimodal Polymer

The polymer of the invention is a multimodal polymer and comprises at least a lower molecular weight component (LMW) and a higher molecular weight (HMW) component.

Usually, a polymer comprising at least two polyethylene fractions, which have been produced under different polymerisation conditions resulting in different (weight average) molecular weights and molecular weight distributions for the fractions, is referred to as "multimodal". The prefix "multi" relates to the number of different polymer fractions present in the polymer. Thus, for example, a polymer consisting of two fractions only is called "bimodal". The form of the molecular weight distribution curve, i.e. the appearance of the graph of the polymer weight fraction as function of its molecular weight, of a multimodal polymer will show two or more maxima or at least be distinctly broadened in comparison with the curves for the individual fractions. For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

In any multimodal polymer there is by definition a lower molecular weight component (LMW) and a higher molecular weight component (HMW). The LMW component has a lower molecular weight than the higher molecular weight component. The difference in molecular weight between these two components is preferably at least 5000.

The term "ethylene copolymer" is used in this application to encompass polymers comprising repeat units deriving from ethylene and at least one comonomer, e.g. at least one aliphatic diene. Preferred copolymers are binary and therefore comprise ethylene and a single comonomer or are terpolymers and comprise two comonomers, e.g. one or more aliphatic dienes or one aliphatic diene and a C₃₋₂₀ α-olefin.

By aliphatic diene is meant a multiply unsaturated hydrocarbon which is aliphatic in nature. The diene cannot therefore comprise an aryl group. Preferably the diene backbone is linear. In a further preferred embodiment, any double bonds present are positioned on terminal carbon atoms, e.g. 1,3-butadiene or 1,9-decadiene.

In any copolymeric component, at least 0.25 mol%, preferably at least 0.5 mol-%, e.g. at least 1-mol%, such as up to 10 mol-% of repeat units may derive from the comonomer(s). Ethylene forms the majority of any copolymer component, e.g. at least 60 mol%, especially at least 80 mol% thereof.

In contrast the term "ethylene homopolymer" as used herein is intended to encompass polymers which consist essentially of repeat units deriving from ethylene. Homopolymers may, for example, comprise at least 99.8 wt%, preferably at least 99.9 wt%, by weight of repeat units deriving from ethylene.

The multimodal polymer of the invention is preferably bimodal or trimodal, preferably bimodal.

As noted above, the multimodal polymer should have a density of 935 to 980 kg/m³, preferably 940 to 975 kg/m³, e.g. 945-965 kg/m³, preferably in the range of from 948 to 962 kg/m³, especially 952 to 960 kg/m³ (ISO 1183). The polymer claimed is thus a high density polyethylene material.

The MFR₂ of the multimodal polymer is preferably less than 20, e.g. less than 15, preferably less than 10, more preferably less than 5. It is also preferred if the MFR is higher than 1 g/10min,

The MFR₂₁ for multimodal polymer should be in the range 1 to 500, preferably 10 to 250 g/lOmin, especially 25 to 100 g/10min

The Mw of multimodal polymer should be in the range 40,000 to 500,000, preferably 50,000 to 400,000, e.g. 50,000 to 150,000. The Mw/Mn for multimodal polymer should be in the range 3 to 30, e.g. 5 to 25.

The multimodal polymer may formed from ethylene along with various comonomers including at least one aliphatic diene in the HMW component. Dienes may preferably have up to 20 carbon atoms, especially up to 10 carbon atoms. The double bonds present can be conjugated or non conjugated. Double bonds are preferably located at the termini of the carbon chain. The backbone of the diene is preferably linear. Preferred dienes are 1,3-butadiene, 1,4-pentadiene, 1,5-hexadiene, 1,6-heptadiene, 1,7-octadiene, 1,8-nonadiene and 1,9-decadiene. 1,3-butadiene and 1,5-hexadiene are especially preferred. It is also within the scope of the invention for a mixture of dienes to be used.

It is also within the scope of the invention for the multimodal polymer to comprise at least one C₃₋₂₀ α-olefin comonomer, e.g. C₃₋₁₂ in addition to one or more diene comonomers, either in the LMW or HMW part of the polymer. Preferred additional olefins include 1-butene, 1-hexene or 1-octene. Where a C₃₋₂₀ α-olefin comonomer is present in both LMW and HMW components, it is preferred if the same olefin is present in both components. Ideally however the lower molecular weight component is a homopolymer and the higher molecular weight component comprises dienes as the only comonomer, i.e. this component is free from mono C3-20 alpha-olefins.

The amount of comonomer present in the multimodal polymer is preferably 0.5 to 12 mol%, e.g. 2 to 10% mole relative to ethylene, especially 4 to 8% mole. Alternatively viewed comonomer contents present in the multimodal polymer may be 1.5 to 10 wt%, especially 2 to 8 wt% relative to ethylene.

### Properties of the LMW Component

The lower molecular weight component of the multimodal polymer preferably has a MFR₂ of at least 20, preferably at least 50 g/10min preferably at least 75 g/10min. The molecular weight of the low molecular weight component should preferably range from 20,000 to 50,000, e.g. 25,000 to 40,000.

The density of the lower molecular weight component may range from 940 to 985 kg/m³, e.g. 955 to 980 kg/m³ preferably 960 to 975 kg/m³.

The lower molecular weight component should preferably form 30 to 70 wt%, e.g. 40 to 60% by weight of the multimodal polymer with the higher molecular weight component forming 70 to 30 wt%, e.g. 40 to 60% by weight. Especially preferably, the HMW component is in excess and the LMW component forms less than 50 wt% of the polymer, e.g. 43 to 48 wt% of the polymer.

Preferably, the LMW component is an ethylene homopolymer,

### Properties of the HMW Component

The higher molecular weight component should have a lower MFR₂ and a lower density than the lower molecular weight component. In a highly preferred embodiment the HMW component of the invention comprises one diene comonomer and one C₃₋₁₂ alpha-olefin comonomer in the HMW component, especially 1-butene or 1-hexene, i.e. is a terpolymer. The combination of a diene and a conventional α-olefin has surprisingly been found to result in a polymer with excellent processabilty and impact strength.

In another highly preferred embodiment the HMW component is a binary copolymer of ethylene and one aliphatic diene, e.g. butadiene.

Where there are two different comonomers present, e.g. a diene and a C₃₋₁₂ alpha-olefin comonomer, the amounts of these comonomers can be varied depending on the desired end use but preferably the diene is present in excess. The molar ratio of the amount of diene comonomer present in the final polymer to the amount C₃₋₂₀ alpha-olefin comonomer may therefore be in the range of 2:1 to 10:1, e.g. 3:1 to 6:1.

The higher molecular weight component should have an MFR₂ of less than 1 g/10 min, preferably less than 0.5 g/10 min, especially less than 0.2 g/10min The HMW component should preferably have a density of less than 940 kg/m³, e.g. less than 930 kg/m³, preferably less than 925 kg/m³. The Mw of the higher molecular weight component may range from 75,000 to 1,000,000, preferably 100,000 to 500,000.

There is preferably a difference of at least 5000, preferably at least 10,000 units between the Mw values of the lower and higher molecular weight components.

### Polymer properties

The polymer of the invention should be crystalline or semi-crystalline as opposed to amorphous. It may therefore have a crystallinity of 50 to 90%.

The polymers of the invention may have a crystalline melting point of 110°C to 140°C.

The polymer of the invention has been found to allow the formation of articles having an ideal balance of properties. They have excellent mechanical properties and are readily processed. In particular, articles exhibit high stiffness and ESCR and good impact strength.

Polymers of the invention preferably possess an tensile modulus of at least 900 MPa, more preferably at least 1000 MPa, especially at least 1100 MPa, more especially at least 1300 MPa.

The ESCR (measured as FNCT full notch creep test) of the polymer may be at least 50 h, preferably at least 75 h, especially at least 80 h..

In a highly preferred embodiment, the polymers of the invention possess a FNCT of at least 50 h and a E-modulus of at least 1100MPa.

The impact strength of the polymers of the invention is also important. Preferably, the polymers possess a charpy impact strength at 23°C of greater than 10, preferably greater than 20 kJ/m².

Preferably, the polymers possess a charpy impact strength at -20°C of greater than 5 preferably greater than 10 kJ/m².

In an especially preferred embodiment the polymers of the invention have a charpy impact strength at 23°C of greater than 10 kJ/m² and an E-modulus of at least 1000 MPa.

A further important property of the polymer of the invention is its rheology. The rheology of the polymer provides a measure of the flow of the polymer and therefore provides a measure of processabilty.

The polymers of the invention preferably possess an eta 0.05 of more than 20,000 Pas.

The polymers of the invention preferably possess an eta 300 of more than 400 Pas.

It is a feature of the polymers of the invention that they possess excellent flow properties at a particular MFR value. This is shown in the examples with reference to a Spiral test in which the polymer material is injected into a spiral mould under certain pressure and the distance travelled by the polymer measured as an indication of its flow properties. Flow is related to the MFR₂ of the material. Thus, in a preferred embodiment therefore, the polymers of the invention possess a Spiral test parameter (1000 bar) which is greater than 30, preferably greater than 35, especially greater than 40..

In a further preferred embodiment, the polymers of the invention possess a Spiral test parameter (1400 bar) which is greater than 40, preferably greater than 50, especially greater than 60.

In a further preferred embodiment, the polymers of the invention possess a Spiral test parameter (600 bar) which is greater than 20, preferably greater than 25, especially greater than 35.

As noted above, the polymers of the invention exhibit an ideal balance of mechanical and processing properties. In a highly preferred embodiment therefore, FNCT ≥ Constant^{*} [(eta300)^{0.34}) ^{*} 10(1000-3.5^{*}E-Modulus)
where eta300 is measured in Pas and modulus in MPa.

Also preferably, the polymers of the invention possess the relationship Charpy≥ Constant^{*}(Eta300)^{1.34}

It will be appreciated that preferred polymers of the invention can comprise one or more or all of the above parameters and hence all combinations of these parameters in a polymer are disclosed.

### Polymer Manufacture

Multimodal polymers of the invention may be prepared for example by two or more stage polymerization or by the use of two or more different polymerization catalysts in a one stage polymerization. It is also possible to employ a multi- or dualsite catalyst. It is important to ensure that the higher and lower molecular weight components are intimately mixed prior to extrusion. This is most advantageously achieved by using a multistage process or a dual site catalyst.

Preferably the multimodal polymer is produced in a two-stage polymerization using the same catalyst, e.g. a single site catalyst or a Ziegler-Natta catalyst. Thus, two slurry reactors or two gas phase reactors could be employed. Preferably however, the multimodal polymer is made using a slurry polymerization in a loop reactor followed by a gas phase polymerization in a gas phase reactor.

A loop reactor - gas phase reactor system is marketed by Borealis as a BORSTAR^{®} reactor system. Any multimodal polymer of use in the invention is preferably formed in a two stage process comprising a first slurry loop polymerisation followed by gas phase polymerisation.

The conditions used in such a process are well known. For slurry reactors, the reaction temperature will generally be in the range 60 to 110°C (e.g. 85-110°C), the reactor pressure will generally be in the range 5 to 80 bar (e.g. 50-65 bar), and the residence time will generally be in the range 0.3 to 5 hours (e.g. 0.5 to 2 hours). The diluent used will generally be an aliphatic hydrocarbon having a boiling point in the range -70 to +100°C. In such reactors, polymerization may if desired be effected under supercritical conditions. Slurry polymerisation may also be carried out in bulk where the reaction medium is formed from the monomer being polymerised.

For gas phase reactors, the reaction temperature used will generally be in the range 60 to 115°C (e.g. 70 to 110°C), the reactor pressure will generally be in the range 10 to 25 bar, and the residence time will generally be 1 to 8 hours. The gas used will commonly be a non-reactive gas such as nitrogen or low boiling point hydrocarbons such as propane together with monomer (e.g. ethylene).

Preferably, the lower molecular weight polymer fraction is produced in a continuously operating loop reactor where ethylene is polymerised in the presence of a polymerization catalyst as stated above and a chain transfer agent such as hydrogen. The diluent is typically an inert aliphatic hydrocarbon, preferably isobutane or propane.

The higher molecular weight component can then be formed in a gas phase reactor using the same catalyst. It can be formed under supercritical conditions if desired.

Where the higher molecular weight component is made second in a multistage polymerisation it is not possible to measure its properties directly. However, the skilled man is able to determine the density, MFR₂ etc of the higher molecular weight component using Kim McAuley's equations. Thus, both density and MFR₂ can be found using K. K. McAuley and J. F. McGregor: On-line Inference of Polymer Properties in an Industrial Polyethylene Reactor, AIChE Journal, June 1991, Vol. 37, No, 6, pages 825-835.

MFR₂ is calculated from McAuley's equation 25, where final MFR₂ and MFR₂ after the first reactor is calculated. The use of these equations to calculate polymer properties in multimodal polymers is common place.

The multimodal polymer may be made using conventional single site, preferably metallocene, or Ziegler-Natta catalysis as is known in the art.

The preparation of a metallocene catalyst can be carried out according or analogously to the methods known from the literature and is within skills of a person skilled in the field. Such catalysts comprise a transition metal compound which contains one or more ligands, like cyclopentadienyl, indenyl or fluorenyl ligands. Preferably the catalyst contains two cyclopentadienyl, indenyl or fluorenyl ligands, which may be bridged by a group preferably containing silicon and/or carbon atom(s). Further, the ligands may have substituents, such as alkyl groups, aryl groups, arylalkyl groups, alkylaryl groups, silyl groups, siloxy groups, alkoxy groups and like.

The catalyst can also be supported on a conventional support such as silica or alumina.

Suitable metallocene catalysts and their preparation are known in the art and are disclosed, among others, in WO-A-95/12622, WO-A-96/32423, WO-A-97/28170, WO-A-98/32776, WO-A-99/61489, WO-A-03/010208,. EP-A-129 368, WO-A-9856831, WO-A-0034341, EP-A-260 130, WO-A-9728170, WO-A-9846616, WO-A-9849208, WO-A-9912981, WO-A-9919335, WO-A-9856831, WO-A-00/34341, EP-A-423 101EP-A-537 130 and WO2005/002744.

Preferred single site catalysts of use in the invention are those comprising tetrahydroindenyl ligands, e.g bis tetrahydroindenyl metallocenes of Zr, Ti and Hf, preferably Zr. Preferred sigma ligands (attached to the metal ion) are halides, benzyl, alkyl and amido, preferably halide or benzyl, more preferably chloride or benzyl, and most preferably chloride.

The multimodal polymer can also be manufactured using Ziegler-Natta (ZN) catalysis. Preferred Ziegler-Natta catalysts comprise a transition metal component and a cocatalyst.

The transition metal component comprises typically a metal of Group 4 or 6 of the Periodic System (IUPAC) as an active metal.

In addition, the catalyst may contain compounds of other metals or elements, like compounds of Groups 2, 13 and 17, such as magnesium compounds and aluminium compounds. Preferably, the transition metal component is a solid and supported on a support material, such as inorganic oxide carrier or magnesium halide.

The magnesium compound is a reaction product of a magnesium dialkyl and an alcohol. The alcohol is a linear or branched aliphatic monoalcohol. Preferably, the alcohol has from 6 to 16 carbon atoms. Branched alcohols are especially preferred, and 2-ethyl-1-hexanol is one example of a preferred alcohol. The magnesium dialkyl may be any compound of magnesium bonding to two alkyl groups, which may be the same or different. Butyl-octyl magnesium is one example of a preferred magnesium dialkyl.

The aluminium compound is chlorine containing aluminium alkyl. Especially preferred compounds are aluminium alkyl dichlorides and aluminium alkyl sesquichlorides.

The titanium compound is a halogen containing titanium compound, preferably chlorine containing titanium compound. Especially preferably the titanium compound is titanium tetrachloride.

Thus, especially preferably the transition metal component comprises a titanium halide, a magnesium alkoxy alkyl compound and an aluminium alkyl dihalide supported on an inorganic oxide carrier.

The catalyst can be prepared by sequentially by contacting the carrier with the above mentioned compounds, as described in EP-A-688794 or WO 99/51646. Alternatively, it can be prepared by first preparing a solution from the components and then contacting the solution with a carrier, as described in WO 01/55230.

The catalysts disclosed in WO 95/35323 are especially useful as they are well suited in production of both a polyethylene having a higher molecular weight and a polyethylene having a lower molecular weight.

Conventional cocatalysts, supports/carriers, electron donors etc can be used. A suitable cocatalyst of use in the invention may be an aluminium alkyl compound, e.g. an aluminium trialkyl (eg triethylaluminium (TEA)) or an aluminium dialkyl halide (eg diethyl aluminium chloride (DEAC)). It may also be an alumoxane, particularly methylaluminoxane MAO or an isobutylalumoxane, eg TIBAO (tetraisobutylalumoxane) or HIBAO (hexaisobutylalumoxane). Alternatively however certain known boron cocatalysts could be used.

Hydrogen may be introduced into any reactor to control the molecular weight of the polymer as is well-known and routine in the art. The concentration of hydrogen should be such that the lower molecular weight component has a desired specified MFR₂. Due to high conversion rates of hydrogen, the required concentration of hydrogen in the reactor which produces the lower molecular weight component is low. Thus, the ratio of hydrogen to ethylene may be between 0.4 and 1 mol hydrogen per 1 kmol of ethylene. The concentration of hydrogen in the LMW phase may therefore be or the order of 3000 to 5000 ppm.

In order to produce the higher molecular weight component it is also possible to use hydrogen in, for example, the gas phase reactor although this is generally at a lower concentration than used in the LMW reactor, e.g. the ratio of hydrogen to ethylene should be lower than 0.4 mol/kmol, preferably less than 0.3 mol/kmol and in particular less than 0.2 mol/kmol. The concentration of hydrogen in the HMW phase may therefore be or the order of 500 to 2000 ppm.

Regarding comonomer concentrations, higher α-olefins need to be present in greater concentrations than lower alpha olefins to ensure the same levels of incorporation.

The amount of comonomer used in the gas phase reactor if 1-butene is the comonomer may range from 3 to 50 mol, preferably 5 to 20 mol per kmol of ethylene.

The diene concentration will generally be higher than these levels to ensure sufficient incorporation, e.g. 5 to 100 mol per kmol of ethylene, such aas 8 to 25 mol per kmol of ethylene. These concentrations are determined based on the amounts of monomer/comonomer added to the polymerisation reactor.

The polymer of the invention is preferably in the form of pellets. By pellets is meant particles of about 50 µm to 8 mm in size, preferably 0.5 to 6 mm, especially 1 to 4 mm in size. Pellets are obtained by conventional cutting and pelletising techniques and are employed in this invention because they can be added directly to an extruder. Pellets are distinguished from polymer powders where particle sizes are less than 50 µm..

The use of pellets ensures that the polymer of the invention is capable of being converted in an article by the simple in line addition of the pellets to an extruder.

Whilst the discussion above centres on the manufacture of the polymer of the invention by a multistage process, the invention also allows the multimodal polymer to form by blending two separately made components together. This is the less preferred embodiment however. The components can therefore be synthesised separately (based on the same procedures discussed above in connection with a multistage process) and simply mixed in any suitable vessel, e.g. in the extruder itself. It is preferred if all the components of the blend are in pellet form themselves when they are mixed

For article formation using the polymer it is important that the different polymer components be intimately mixed prior to extrusion and moulding as otherwise there is a risk of inhomogeneities. Thus, it is especially preferred to thoroughly blend the components, for example using a twin screw extruder, preferably a counter-rotating extruder, prior to extrusion and moulding.

### Other components

The composition of the invention may also comprise other polymer components, e.g. LDPE, further LLDPE or multimodal LLDPE components or HDPE polymers.

Preferably however, no other polymer components are present, i.e. the composition consists essentially of the three components. The composition can however contain conventional additives such as antioxidants, UV stabilisers, acid scavengers, nucleating agents, anti-blocking agents as well as polymer processing agent (PPA). Preferably therefore, the composition consists essentially of the polymer, i.e. it contains these alone along with conventional polymer additives.

### Article and Properties

The polymers of the invention are preferably for use in moulded items, e.g. injection moulded, compression moulded, blow moulded or rotomoulded articles or combinations of these techniques, e.g. injection stretch blow moulding. It is envisaged however that the claimed polymers could also be used to make pipes, extrusion coatings or films.

Ideally, the polymer is formed into a cap or closure. Caps formed from the polymer of the invention may be screw caps, i.e. they are screwed onto the top of a container to secure them. Thus, the screw caps possess a threaded closure. Caps are normally made to fit bottles with necks made according to the British Plastic Federation (BPF) standard or the Plastic Closures Only (PCO) standard. BPF closures are made for both plastic and glass bottles whereas PCO closures fit plastic bottles only. A typical BPF or PCO bottle neck is 28 mm in diameter and the caps of the invention preferably fit such bottle necks.

The caps may be used with any container, typically a polyethylene terephthalate (PET) bottle. Such bottles may contain still or carbonated drinks, in particular still or sparkling water, particularly still water. Bottle size of 330 ml to 2 L, especially 500 ml to 1.5L are preferred.

The caps of the invention can be made using injection moulding. Injection moulding can be accomplished using convention techniques, e.g. using a Nestal moulding apparatus. Moulding temperature may be in the range 190 to 230°C, injection.

The invention will now be described further with reference to the following non-limiting examples:

### Analytical Tests

The following methods were used to measure the properties that are defined generally above and in examples below. The material and (injection) moulded samples used for the measurements and definitions were prepared as described under the particular method or in tables.

**Density** of the materials is measured according to ISO 1183 method D.

**Tensile modulus** was measured at 23°C on specimen (according to ISO3167 - Multipurpose test specimen, type A (injected moulded) according to ISO 527-2:1993. The modulus was measured at a speed of 50mm/min (Testing speed of 5mm/min for brittle materials with an strain at break <10%).

**MFR2/21** are measured according to ISO 1133 at 190°C at loads of 2.16 and 21.6 kg respectively.

### Dynamic viscosity and Shear thinning index

Dynamic rheological measurements were carried out with a rheometer, namely Rheometrics RDA-II, on compression moulded samples under nitrogen atmosphere at 190 °C using 25 mm diameter plates and plate and plate geometry with a 1.2 mm gap. The oscillatory shear experiments were done within the linear viscosity range of strain at frequencies from 0.05 to 300 rad/s (ISO 6721-1). Five measurement points per decade are made.

The values of storage modulus (G'), loss modulus (G") complex modulus (G^{*}) and complex viscosity (η^{*}) were obtained as a function of frequency (η). η100 is used as abbreviation for the complex viscosity at the frequency of 100 rad/s.

Shear thinning index (SHI), which correlates with MWD and is independent of Mw, was calculated according to Heino ("Rheological characterization of polyethylene fractions" Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362, and "The influence of molecular structure on some rheological properties of polyethylene", Heino, E.L., Borealis Polymers Oy, Porvoo, Finland, Annual Transactions of the Nordic Rheology Society, 1995.)

SHI value is obtained by calculating the complex viscosities at given values of complex modulus and calculating the ratio of the two viscosities. For example using the values η^{*}(2.7 kPa) and η^{*}(210 kPa) at a constant value of complex modulus of 2.7 kPa and 210 kPa, respectively. The shear thinning index SHI(2.7/210) is defined as the ratio of the two viscosities η^{*}(2.7 kPa) and η^{*}(210 kPa), i.e. η(2.7)/η(210).

It is usually not practical to measure the complex viscosity at the value of frequency of 0.05 rad/s directly. The value can be extrapolated by conducting the measurements down to the frequency of 0.126 rad/s, drawing the plot of complex viscosity vs. frequency, drawing a best-fitting line through the five points corresponding to the lowest values of frequency and reading the viscosity value from this line.

### Molecular weights and molecular weight distribution, Mn, Mw and Mw/Mn

were measured by Gel Permeation Chromatography (GPC) according to the following method:
The weight average molecular weight Mw and the molecular weight distribution (MWD = Mw/Mn wherein Mn is the number average molecular weight and Mw is the weight average molecular weight) is measured by a method based on ISO 16014-4:2003. A Waters 150CV plus instrument, equipped with refractive index detector and online viscosimeter was used with 3 x HT6E styragel columns from Waters (styrene-divinylbenzene) and 1,2,4-trichlorobenzene (TCB, stabilized with 250 mg/L 2,6-Di tert butyl-4-methyl-phenol) as solvent at 140 °C and at a constant flow rate of 1 mL/min. 500 µL of sample solution were injected per analysis. The column set was calibrated using universal calibration (according to ISO 16014-2:2003) with 10 narrow MWD polystyrene (PS) standards in the range of 1.05 kg/mol to 11 600 kg/mol. Mark Houwink constants were used for polystyrene and polyethylene (K: 19 x10⁻³ dL/g and a: 0.655 for PS, and K: 3.92 x10⁻⁴ dL/g and a: 0.725 for PE). All samples were prepared by dissolving 0.5 - 3.5 mg of polymer in 4 mL (at 140 °C) of stabilized TCB (same as mobile phase) and keeping for 2 hours at 140 °C and for another 2 hours at 160 °C with occasional shaking prior sampling in into the GPC instrument.

### Charpy impact

This method was applied on injection moulded V-notched samples according to ISO 179/1-2000. The samples are tested at 23°C and at -20°C.

### Spiral test

Spiral Test is carried out using an Engel ES330/65 cc90 injection moulding apparatus with a spiral mould and pressure of 600, 1000 or 1400 bar
screw diameter: 35 mm
max. piston displacement: 150 cm3
spec. injection pressure: 600, 1000, or 1400 bar
tool form: oval form; provided by Axxicon; thickness 2 mm, breadth: 5 mm
temperature in pre-chamber and die: 230°C
temperature in zone 2/zone 3/zone 4/zone 5: 230°C/230°C/225°C/200°C
injection cycle: injection time including holding: 10 s
cooling time: 15 s
injection pressure: Follows from the predetermined length of the testing material.
dwell pressure = injection pressure
screw speed: 30 rpm
system pressure: 10 bar
metering path: should be chosen so that the screw stops 20 mm before its final position at the end of the dwell pressure.
tool temperature: 40°C
The spiral flow length can be determined immediately after the injection operation.

### FNCT TEST

ESCR was measured according to the full notch creep test method (FNCT) according to ISO/DIS 16770.3 at 50 °C and 6 MPa stress with a notch depth of 1 mm and specimen dimensions 123 mm x 6 mm x 20 mm. The solvent used was 10 vol% Igepal CO-630 in deionized water. Compression moulded samples were employed (ISO1872-2).

### Catalyst preparation Example 1: Preparation of metallocene catalyst

The metallocene complex employed was bis(tetrahydroindenyl) zirconium dichloride (Witco). A complex solution of 8,0 ml toluene, 254,3 mg of said complex and 28,0 ml 30 wt% methylalumoxane in toluene (MAO, supplied by Albemarle) was prepared. Precontact time was 60 minutes at 25 °C with stirring, 250 rpm. The resulting complex solution was added dropwise, during 20 minutes onto 20.0 g activated silica (commercial silica carrier, Sylopol9-393A, supplier: Grace) with stirring at 800 rpm. Contact time was 2 h at 25 °C with stirring, 250 rpm. The catalyst was dried under argon purge for 3 h at 50°C. The obtained catalyst had Al/Zr of 200 mol/mol; Zr 113 % loading (Zr 0,21 wt%)

### Catalyst preparation Example 2: Preparation of Ziegler Natta Catalyst Complex preparation:

### Preparation of the catalyst:

Mg complex preparation: BOMAG (butyl octyl magnesium, 20wt% sol in toluene 1,4 mol Mg/kg of carrier) was fed to a reactor. 2-ethylhexanol (2-EHA - 2,56 mol/kg of carrier, dried on molecular sieves) was slowly added (at least 1h addition). The EHA/Mg molar ratio was 1,83. Reaction temperature was kept below 38°C. The solution was mixed for 5h minimum. 480 kg of silica carrier, calcinated at 600°C for 4h, was added to a reactor. EADC (1,6mol/kg of carrier) and pentane (0,19kg/kg of carrier) were mixed together and then slowly transferred to the reactor containing silica. During this operation the reactor temperature is kept between 30 and 40°C. The solution EADC/pentane was mixed with the silica for 2h. Then, Mg-complex (1,4 mol Mg/kg of carrier) was added during minimum 90 min to the reactor and the temperature was kept under 40°C during the addition. The mixture was mixed during 1h at a temperature between 30 and 40°C.
Then pentane (0,55kg/kg of carrier) was added to the reactor and mixed for 5h. The temperature was kept under 40°C. TiCl4 (0,7 mol/kg of carrier) was added during at least 45 min and the reactor temperature was kept. The mixture was mixed during 5h at a temperature between 40 and 50°C. After the catalyst was dried under nitrogen flow during 2h at 60°C and 2h at 80°C.

### Polymerisation Process

All experiments were carried out in a semi batchwise operated benchscale reactor 8L (metallocene) or 5.3 L (Ziegler Natta) equipped with a TEFLON modified stirrer together with a flat industrial spray nozzle (widening angle of 40° at p = 3 bar for improved comonomer distribution). Nozzle specifications: type, 4001, standard spray, H-VV, VeeJet, orifice diameter, 0.66 mm, producer - Spraying Systems and Co.. All starting compounds (monomer, comonomer, hydrogen and nitrogen or propane) were fed and distributed through the nozzle.

The bimodal polymers were made using the following conditions:

### Step 1: Slurry polymerization (in isobutane).

The conditions of the slurry polymerisation in step 1 mimic the loop conditions (= loop reactor). The molecular weight of the slurry product was adjusted with a blending gas comprising 3590 ppm hydrogen. The ethylene partial pressure is 6.2 bar, total pressure = 21 bar, diluent used = isobutane. Reactor temperature = 85°C. Upon completion of step 1, the diluent was evaporated, and the reaction proceeded to step 2.

### Step 2 Gas phase polymerization

In step 2 the polymerisation was effected in the same reactor but as a gas phase polymerisation. The comonomer used was 1-butene, 1-hexene or butadiene. The gas used for adjusting the total reactor pressure was nitrogen or propane. The monomer (ethylene) partial pressure was 6.2 bar throughout. A summary of all experimental conditions is given in table 1.

| | Comp 1 | Comp 2 | Comp 3 | Ex 1 | Ex 2 |
|---|---|---|---|---|---|
| Catalyst | Cat 1 | ZN (Cat 2) | Cat 1 | Cat 1 | Cat 1 |
| Diluent | Isobutane | Propane | Isobutane | Isobutane | Isobutane |
| Pressure (bar) | 21 | 58 | 21 | 21 | 21 |
| Ethylene amt | 6.2 bars | Supercritical | 6.2 bars | 6.2 bars | 6.2 bars |
| Cat Amount (g) | 1.8 | 0.25 | 1.8 | 1.8 | 1.55 |
| Temp Loop °C | 85 | 95 | 85 | 85 | 85 |
| H₂ loop (ppm) | 3580 | 4.5 bar | 3580 | 3590 | 3590 |
| Loop run time (min) | 24 | 38 | 24 | 33 | 35 |
| Polymer amt g | 1015 | 465 | 990 | 1030 | 995 |
| Density loop kg/m³ | 969 | 973 | 969 | 969 | 969 |
| MFR₂ loop g/10min | 100 | 180 | 102 | 98 | 98 |
| **Gas Phase** | | | | | |
| Temperature °C | 70 | 85 | 70 | 70 | 70 |
| Propane bar | 14.8 | | 14.8 | 14.8 | - |
| Nitrogen | - | - | - | - | 14.8 |
| H2 gas phase (ppm) | 1320 | 0.2 bar | 1250 | 1250 | 2920 |
| Butadiene ml | - | - | - | 22 | 22 |
| Butene ml | 27 | - | 21 | - | 5 |
| Hexene ml | - | 35 | - | - | - |
| Run time gas min | 83 | 74 | 83 | 79 | 92 |
| Total run time min | 107 | 112 | 107 | 112 | 127 |
| Polymer amt final g | 1770 | 840 | 1750 | 1820 | 1760 |
| Split wt% | 55/45 | 55/45 | 55/45 | 55/45 | 55/45 |
| Density final kg/m³ | 952 | 953 | 955 | 952 | 956 |
| MFR₂ final g/10min | 2.4 | 1.1 | 2.9 | 0.02 | 0.46 |
| MFR₂₁ final g/10min | 114 | 134 | 149 | 5.6 | 45 |
| Mw final | 85000 | 115000 | 85000 | 330000 | 135000 |
| Mn final | 12000 | 11000 | 12000 | 16000 | 15000 |
| Mw/Mn final | 7.1 | 11 | 7.7 | 21 | 9 |
| E modulus (MPa) | 885 | 830 | 910 | 1400 | 1000 |
| eta 0.05 Pas | 4496 | 9000 | 3798 | 523185 | 36174 |
| Rheology eta 300 Pas | 387 | 541 | 316 | 1017 | 552 |
| ESCR (FNCT), hrs | 13 | | 7.2 | 91 | |
| Charpy 23°C kJ/m² | 9 | 18 | 8.5 | 7.7 | 25.1 |

### Example 4

Following the protocol above, the following further polymers where manufactured:

| Example | MFR₂ | Density | Comonomer | Mw | Mn | MWD | Spiral 600 | Spiral 1000 | Spiral 1400 | Charpy 23°C | Charpy -20°C | E-mod |
|---|---|---|---|---|---|---|---|---|---|---|---|---|
| Ex 2 | 0.46 | 956 | But, 4= | 135000 | 15000 | 9 | 22.69 | 32.8 | 42.2 | 25.1 | 14.9 | 1000 |
| Ex 3 | 1.8 | 959 | But, 4= | 90000 | 13000 | 6.9 | 28.8 | 42.6 | 55.5 | 11.9 | 10.5 | 1000 |
| Ex 4 | 5.1 | 959 | But, 4= | 70000 | 13000 | 5.5 | 35 | 49.5 | 62.3 | 6.8 | 5.2 | 1045 |
| Ex 5 | 5.6 | 958 | But, 4= | 75000 | 13000 | 5.6 | 37.2 | 52.3 | 65.8 | 6 | 3.9 | 1015 |
| Ex 6 | 11.9 | 958 | Hex, 6= | 65000 | 10000 | 5.8 | 50.3 | 70.9 | 88.4 | 3.5 | 3.5 | 1010 |
| Comp 1 | 2.4 | 952 | But | 85000 | 12000 | 7.1 | 29.6 | 42.4 | 54.2 | 9 | 5 | 885 |
| Comp 2 | 1.1 | 953 | Hex | 115000 | 11000 | 11 | 25.5 | 38.9 | 50.4 | 18 | | 830 |

| | | | | | | | | | | | | |
|---|---|---|---|---|---|---|---|---|---|---|---|---|
| 4= is 1,3- butadiene but = butene 6= is 1,5-hexadiene hex = hexene | | | | | | | | | | | | |

## Claims

1. A multimodal polymer comprising a higher molecular weight component and a lower molecular weight component,
said lower molecular weight component being an ethylene homopolymer or ethylene copolymer with at least one C₃₋₂₀ α-olefin; and
said higher molecular weight component being a copolymer of ethylene, at least one aliphatic diene and optionally at least one C₃₋₂₀ α-olefin;
wherein the density of the multimodal polymer is from 935 to 980 kg/m³.

2. A polymer as claimed in claim 1 wherein the lower molecular weight component is a homopolymer and the higher molecular weight component contains ethylene and diene only or ethylene, one diene and one C3-20 alpha olefin.

3. A polymer as claimed in any one of claims 1 and 2 wherein the diene is butadiene or hexadiene.

4. A polymer as claimed in any preceding claim having an FNCT of at least 75 h.

5. A polymer as claimed in any preceding claim having a charpy impact strength at 23'C of at least 20 kJ/m2.

6. A polymer as claimed in any preceding claim having a spiral flow (1000 bars) of at least 30.

7. A polymer as claimed in any preceding claim having a spiral flow (1400 bars) of at least 40.

8. A polymer as claimed in any preceding claim having a spiral flow (600 bars) of at least 20.

9. An article comprising a polymer as described in any preceding claim, especially a moulded article.

10. Use of a polymer as defined in claims 1 to 8 in the manufacture of a moulded article, e.g. a cap or closure.

11. A process for the manufacture of a polymer as hereinbefore defined comprising, in a first stage polymerising ethylene and optionally at least one C₃₋₂₀ α-olefin in the presence of a catalyst to form a lower molecular weight component;
recovering the LMW component;
feeding the LMW component to a second stage;
feeding ethylene, at least one aliphatic diene and optionally at least one C₃₋₂₀ α-olefin into said second stage;
subjecting the additional ethylene at least one aliphatic diene and optionally at least one C₃₋₂₀ α-olefin to a second polymerisation reaction in the presence of the catalyst from the first stage and the LMW component; and
recovering the combined polymerisation product from the second reaction zone.

12. A process as claimed in claim 11 wherein the catalyst is a single site catalyst.

13. A process as claimed in claim 11 or 12 wherein said catalyst comprises a complex containing two tetrahydroindenyl ligands.
